# EUROPÄISCHE PATENTSCHRIFT

(11) **EP 1 651 465 B1**
(45) Veröffentlichungstag und Bekanntmachung des Hinweises auf die Patenterteilung: **29.07.2009**
(21) Anmeldenummer: 04763646.9
(22) Anmeldetag: 30.07.2004
(51) Int. Cl.: B60N 2/20, B60N 2/22

(54) **BESCHLAG FÜR EINEN FAHRZEUGSITZ**
FITTING FOR A VEHICLE SEAT
FERRURE POUR UN SIEGE DE VEHICULE

(30) Priorität: 06.08.2003 DE 10335869
(43) Veröffentlichungstag der Anmeldung: 03.05.2006
(73) Patentinhaber: KEIPER GmbH & Co. KG, 67657 Kaiserslautern (DE)
(72) Erfinder: WAHLEN, Hilmar, 42499 Hückeswagen (DE); FRAISSE, Gaetan, 40721 Hilden (DE)
(74) Vertreter: Patentanwälte Hosenthien-Held und Dr. Held
(86) Internationale Anmeldenummer: PCT/EP2004/008562
(87) Internationale Veröffentlichungsnummer: WO 2005/016685

(56) Entgegenhaltungen:
- WO-A-97/20706
- DE-B- 1 150 586
- FR-A- 1 197 892
- GB-A- 1 168 790

## Beschreibung

Die Erfindung betrifft einen Beschlag für einen Fahrzeugsitz, insbesondere für einen Kraftfahrzeugsitz, mit den Merkmalen des Oberbegriffs des Anspruches 1.

Bei bekannten Beschlägen dient die Welle der Übertragung der Entriegelungsbetätigung zwischen zwei prinzipiell gleichen Beschlägen. Die innerhalb des Beschlags angeordneten Bauteile sind so bemessen, dass auch bei Aufsummierung aller Toleranzen der Beschlag verriegelt bleibt. Allerdings kann es bei sehr großen Toleranzen zu leichten Klappergeräuschen kommen, die störend wirken. Zur Vermeidung dieser Geräusche sind die Toleranzen gering zu halten. In der WO 97/20706 A1 wird daher ein Beschlag der eingangs genannten Art vorgeschlagen, von dem auf jeder Fahrzeugsitzseite genau einer vorgesehen ist, welche durch die Welle auf Mitnahme gekoppelt sind, wobei eine zwischen den Mitnehmern der beiden Beschläge angeordnete Schraubenfeder die Mitnehmer in Umfangsrichtung und axialer Richtung gegeneinander vorspannt.

Der Erfindung liegt die Aufgabe zu Grunde, einen Beschlag der eingangs genannten Art zu verbessern. Diese Aufgabe wird erfindungsgemäß durch einen Beschlag mit den Merkmalen des Anspruches 1 gelöst. Vorteilhafte Ausgestaltungen sind Gegenstand der Unteransprüche.

Die Feder erfüllt zwei Funktionen. Zum einen spannt sie die Welle gegen die Betätigungsrichtung vor, also in die verriegelnde Richtung, so dass über die Welle ein schließendes Moment in den Beschlag eingeleitet und infolgedessen der Beschlag spielfrei wird. Störende Klappergeräusche werden verhindert. Zum anderen sichert die Feder zugleich die Welle gegenüber dem Beschlag in axialer Richtung, womit auch eine Spielfreistellung in axialer Richtung erfolgt. Eine ansonsten zusätzlich vorgesehene Axialsicherung kann entfallen, so dass zur Verringerung der Herstellungskosten ein Bauteil eingespart werden kann.

Für ihre beiden Funktionen sitzt die Feder mit einem ersten Schenkel auf der Welle, um einen festen Sitz zu gewährleisten, insbesondere für die Funktion als Axialsicherung. Dabei ist der erste Schenkel vorzugsweise mehrfach um die Welle geschlungen ist, um in der Art einer Schlingfederbremse zu wirken. Zusätzlich greift vorzugsweise ein am Ende des ersten Schenkels vorgesehener Innenhaken in das Profil der Welle, insbesondere wenigstens näherungsweise formschlüssig, um den festen Sitz für die Entklapperungsfunktion und die Funktion als Axialsicherung zu verbessern und um die Montage zu erleichtern.

Die Feder ist vorzugsweise mit einem zweiten Schenkel am Beschlag abgestützt, der dann das Gegenlager für das schließende Moment bildet. Dieser zweite Schenkel steht vorzugsweise weitgehend gestreckt von der Welle ab und weist vorzugsweise am Ende einen Außenhaken auf, der den Beschlag hintergreift, beispielsweise am Beschlagunterteil und/oder an einem am Beschlagunterteil angebrachten Adapter.

Der erfindungsgemäß ausgebildete Beschlag ist für alle Arten von Fahrzeugsitzen mit neigungseinstellbarer Lehne einsetzbar, worunter auch Fahrzeugsitze mit einer lediglich klappbaren Lehne verstanden werden sollen. Vorzugsweise findet der Beschlag paarweise Anwendung, wenn die Betätigung einer Welle, welche die Übertragung zwischen den beiden Beschlägen verwirklicht, manuell angetrieben ist.

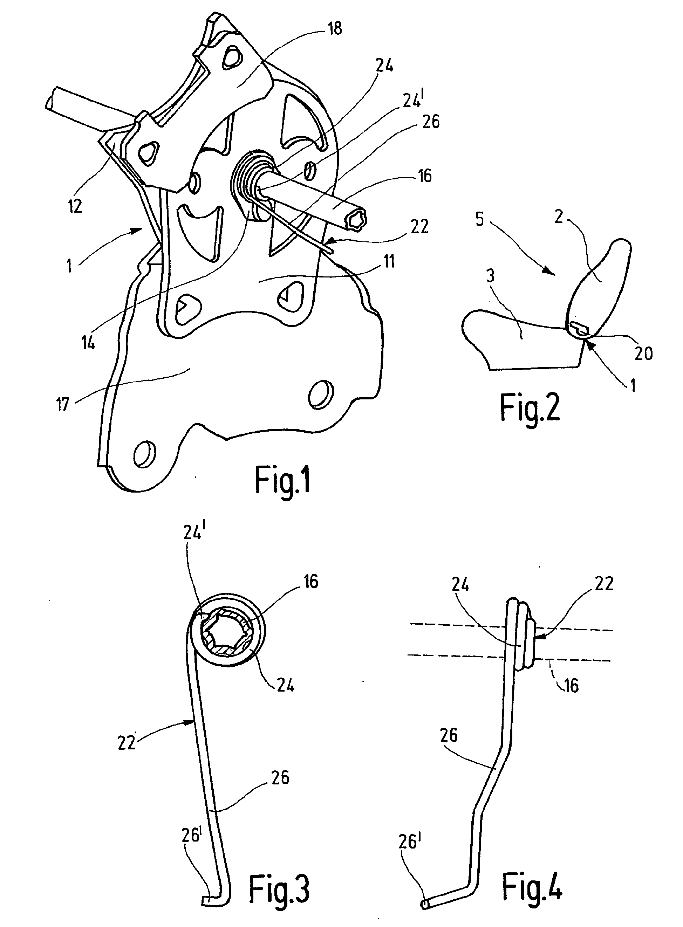

Im folgenden ist die Erfindung anhand eines in der Zeichnung dargestellten Ausführungsbeispiels näher erläutert. Es zeigen
- Fig. 1: eine perspektivische Ansicht des Ausführungsbeispiels,

- Fig. 2: eine schematische Darstellung eines Fahrzeugsitzes,
- Fig. 3: eine Ansicht der Feder samt Radialschnitt durch die Welle, und
- Fig. 4: eine weitere Ansicht der Feder samt angedeuteter Seitenansicht der Welle.

Ein Beschlag 1 ist zur Neigungseinstellung einer Lehne 2 relativ zu einem Sitzteil 3 eines Fahrzeugsitzes 5 in einem Kraftfahrzeug vorgesehen und auf einer Seite des Fahrzeugsitzes 5 angebracht. Ein prinzipiell gleichwirkender Beschlag 1 ist auf der anderen Seite des Fahrzeugsitzes 5 angebracht. Der Beschlag 1 weist ein Beschlagunterteil 11 als erstes Beschlagteil, ein relativ zu diesem verdrehbares Beschlagoberteil 12 als zweites Beschlagteil, einen Mitnehmer 14 und eine horizontal angeordnete, profilierte, hohle Welle 16 als Übertragungsmittel zum anderen Beschlag 1 auf. Die Geometrie und Anordnung der Welle 16 definiert die verwendeten Richtungsangaben. Am Beschlagunterteil 11 ist ein Adapter 17 angebracht, mittels welchem der Beschlag 1 an der Struktur des Sitzteils 3 angebracht ist. Am Beschlagoberteil 12 ist ein Halteblech 18 angebracht, mit welchem es zusammen an der Struktur der Lehne 2 angebracht ist. Das Halteblech 18 übergreift den oberen Randbereich des Beschlagunterteils 11 wenigstens teilweise und sorgt so für einen axialen Zusammenhalt der beiden Beschlagteile 11 und 12. Der Adapter 17 übergreift in gleicher Weise den unteren Rand des Beschlagoberteils 12 und wirkt somit als ein weiteres Halteblech.

Im Inneren des Beschlags 1 sind in an sich bekannter Bauweise ein auf dem Mitnehmer 14 drehfest sitzender Exzenter, zwei in radialer Richtung beweglich im Beschlagunterteil 11 gelagerte, durch den Exzenter beaufschlagte Zahnsegmente, eine Kulissenscheibe zum Rückholen der Zahnsegmente und ein am Beschlagoberteil 12 ausgebildeter Zahnkranz vorgesehen. Im verriegelten Zustand des Beschlags 1 sorgt eine Vorspannung des Exzenters dafür, daß die Zahnsegmente in Eingriff mit dem Zahnkranz stehen. Durch eine Betätigung der Welle 16, d.h. Drehung mittels eines endseitig angebrachten Handhebels 20 in Umfangsrichtung, wird der drehfest auf der Welle 16 sitzende Mitnehmer 14 gedreht. Der Handhebel 20 kann auch so angebracht sein, daß er den Mitnehmer 14 dreht, welcher dann die Welle 16 dreht. Der Mitnehmer 14 nimmt den Exzenter mit, der wiederum über die Kulissenscheibe die Zahnsegmente radial nach innen zieht, so daß der Beschlag 1 entriegelt ist.

Aufgrund von Toleranzen bei der Fertigung und der Montage hat der Beschlag 1 im verriegelten Zustand etwas Spiel, so daß leichte Klappergeräusche auftreten könnten. Um den Beschlag 1 zu entklappern, ist eine Feder 22 vorgesehen, welche die Welle 16 entgegen der Betätigungsrichtung vorspannt, d.h. durch Einleiten eines schließenden Momentes in den Beschlag das Verriegeln unterstützt. Allerdings ist die Feder 22 so bemessen, daß ihre Vorspannung sehr klein gegenüber der zum Entriegeln aufzubringenden Betätigungskraft ist.

Die Feder 22 ist eine speziell gewickelte Schenkelfeder. Ein innerer, erster Schenkel 24 sitzt auf der Welle 16 und ist mehrfach um diese geschlungen. Die einzelnen Windungen weisen dabei zum freien Ende hin einen abnehmenden Durchmesser auf. Am freien Ende des ersten Schenkels 24 ist ein Innenhaken 24' ausgebildet, mit welchem der erste Schenkel 24 näherungsweise formschlüssig in das Profil der Welle 16 greift. Ein mit dem inneren Schenkel 24 einstückig ausgebildeter, äußerer, zweiter Schenkel 26 steht weitgehend gestreckt von der Welle 16 ab. Zum Abstützen der Feder 22 hintergreift der äußere Schenkel 26 mit einem abgewinkelten Außenhaken 26' das Beschlagunterteil 11 und den Adapter 17 in dem Bereich, in dem beiden überlappend angeordnet sind.

Durch das Umschlingen der Welle 16 mittels des ersten Schenkels 24 der Feder 22 sowie durch das Eingreifen des Innenhakens 24' in das Profil der Welle 16 sitzt die Feder 22 so fest auf der Welle 16, daß sie als Axialsicherung für die Welle 16 gegenüber dem Beschlag 1 wirkt.

### Bezugszeichenliste

- 1: Beschlag
- 2: Lehne
- 3: Sitzteil
- 5: Fahrzeugsitz
- 11: Beschlagunterteil, erstes Beschlagteil
- 12: Beschlagoberteil, zweites Beschlagteil
- 14: Mitnehmer
- 16: Welle
- 17: Adapter
- 18: Halteblech
- 20: Handhebel
- 22: Feder
- 24: erster Schenkel
- 24': Innenhaken
- 26: zweiter Schenkel
- 26': Außenhaken

## Patentansprüche

1. Beschlag für einen Fahrzeugsitz, insbesondere für einen Kraftfahrzeugsitz, mit einem ersten Beschlagteil (11), einem relativ zu diesem verdrehbaren und verriegelbaren zweiten Beschlagteil (12), einer profilierten Welle (16), deren Betätigung den Beschlag (1) entriegelt, und einer Feder (22), welche die Welle (16) gegen die Betätigungsrichtung vorspannt und zugleich die Welle (16) gegenüber dem Beschlag (1) in axialer Richtung der Welle (16) sichert, **dadurch gekennzeichnet, dass** die Feder (22) mit einem ersten Schenkel (24) auf der Welle (16) sitzt.

2. Beschlag nach Anspruch 1, **dadurch gekennzeichnet, dass** der erste Schenkel (24) mehrfach um die Welle (16) geschlungen ist.

3. Beschlag nach Anspruch 1 oder 2, **dadurch gekennzeichnet, dass** ein am Ende des ersten Schenkels (24) vorgesehener Innenhaken (24') in das Profil der Welle (16) greift.

4. Beschlag nach Anspruch 3, **dadurch gekennzeichnet, dass** der Innenhaken (24') wenigstens näherungsweise formschlüssig in das Profil der Welle (16) greift.

5. Beschlag nach einem der Ansprüche 1 bis 4, **dadurch gekennzeichnet, dass** die Feder (22) mit einem zweiten Schenkel (26) am Beschlag (1) abgestützt ist.

6. Beschlag nach Anspruch 5, **dadurch gekennzeichnet, dass** der zweite Schenkel (26) weitgehend gestreckt von der Welle (16) absteht.

7. Beschlag nach Anspruch 5 oder 6, **dadurch gekennzeichnet, dass** ein am Ende des zweiten Schenkels (26) vorgesehener Außenhaken (26') den Beschlag (1) hintergreift.

8. Beschlag nach Anspruch 7, **dadurch gekennzeichnet, dass** der Außenhaken (26') das Beschlagunterteil (11) und/oder einen am Beschlagunterteil (11) angebrachten Adapter (17) hintergreift.

9. Fahrzeugsitz (5) mit einer relativ zu einem Sitzteil (3) neigungseinstellbaren Lehne (2) und wenigstens einem Beschlag nach einem der Ansprüche 1 bis 8.

## Claims

1. A fitting for a vehicle seat, in particular for a motor vehicle seat, having a first fitting part (11), a second fitting part (12), which is rotatable and lockable relative thereto, a profiled shaft (16), the actuation of which unlocks the fitting (1), and a spring (22), which pretensions the shaft (16) counter to the actuating direction, and also secures the shaft (16) relative to the fitting (1) in the axial direction of the shaft (16), **characterized in that** the spring (22) sits with a first leg (24) on the shaft (16).

2. The fitting as claimed in claim 1, **characterized in that** the first leg (24) is looped repeatedly about the shaft (16).

3. The fitting as claimed in claim 1 or 2, **characterized in that** an inner hook (24') provided at the end of the first leg (24) reaches into the profile of the shaft (16).

4. The fitting as claimed in claim 3, **characterized in that** the inner hook (24') reaches at least approximately in a form-fitting manner into the profile of the shaft (16).

5. The fitting as claimed in one of claims 1 to 4, **characterized in that** the spring (22) is supported with a second leg (26) on the fitting (1).

6. The fitting as claimed in claim 5, **characterized in that** the second leg (26) protrudes in a largely stretched-out manner from the shaft (16).

7. The fitting as claimed in claim 5 or 6, **characterized in that** an outer hook (26') provided at the end of the second leg (26) reaches behind the fitting (1).

8. The fitting as claimed in claim 7, **characterized in that** the outer hook (26') reaches behind the lower part (11) of the fitting and/or an adaptor (17) attached to the lower part (11) of the fitting.

9. A vehicle seat (5) having a back rest (2) which can be adjusted in inclination relative to a seat part (3), and at least one fitting as claimed in one of claims 1 to 8.

## Revendications

1. Armature pour un siège de véhicule, en particulier pour un siège de véhicule automobile, comportant une première partie d'armature (11), une seconde partie d'armature (12) apte à pivoter et à être verrouillée par rapport à celle-ci, un arbre profilé (16), dont l'actionnement déverrouille l'armature (1), et un ressort (22), lequel précontraint l'arbre (16) contre le sens d' actionnement et en même temps bloque l'arbre (16) contre l'armature (1) dans le sens axial de l'arbre (16), **caractérisée par le fait que** le ressort (22) est en appui par une première branche (24) sur l'arbre (16).

2. Armature selon la revendication 1,
**caractérisée par le fait que** la première branche (24) est enroulée plusieurs fois autour de l'arbre (16).

3. Armature selon l'une des revendications 1 ou 2, **caractérisée par le fait qu'**un crochet interne (24') prévu sur l'extrémité de la première branche (24) est en prise dans le profil de l'arbre (16).

4. Armature selon la revendication 3,
**caractérisée par le fait que** le crochet interne (24') est en prise au moins approximativement par complémentarité de forme dans le profil de l'arbre (16).

5. Armature selon l'une des revendications 1 à 4, **caractérisée par le fait que** le ressort (22) est supporté sur l'armature (1) par une seconde branche (26).

6. Armature selon la revendication 5,
**caractérisée par le fait que** la deuxième branche (26) est éloignée de l'arbre (16) de manière largement étendue.

7. Armature selon l'une des revendications 5 ou 6, **caractérisée par le fait qu'**un crochet externe (26') prévu sur l'extrémité de la deuxième branche (26) engage par l'arrière l'armature (1).

8. Armature selon la revendication 7,
**caractérisée par le fait que** le crochet externe (26') engage par l'arrière la partie intérieure d'armature (11) et/ou à un adaptateur (17) fixé sur la partie inférieure d' armature (11).

9. Siège de véhicule (5) comportant un dossier (2) réglable en inclinaison par rapport à une partie de siège (3) et au moins une armature telle que définie à l'une des revendications 1 à 8.
